Europäisches Patentamt

(19) European Patent Office

Office européen des brevets

(11) EP 0 667 203 B1

(12) **EUROPEAN PATENT SPECIFICATION**

(45) Date of publication and mention
of the grant of the patent:
**08.07.1998 Bulletin 1998/28**

(21) Application number: **94924404.0**

(22) Date of filing: **22.08.1994**

(51) Int. Cl.$^6$: **B23H 7/10**

(86) International application number:
**PCT/JP94/01386**

(87) International publication number:
**WO 95/06537 (09.03.1995 Gazette 1995/11)**

(54) **SYSTEM FOR CONTROLLING TENSION OF WIRE**

SYSTEM ZUR DRAHTSPANNUNGSSTEUERUNG

SYSTEME DE REGULATION DE LA TENSION D'UN FIL

(84) Designated Contracting States:
**CH DE LI**

(30) Priority: **01.09.1993 JP 217103/93**

(43) Date of publication of application:
**16.08.1995 Bulletin 1995/33**

(73) Proprietor: **FANUC LTD.**
**Minamitsuru-gun, Yamanashi 401-05 (JP)**

(72) Inventors:
• **UCHIYAMA, Tatsuhiro**
**Fanuc Mansionharimomi 11-506**
**Yamanashi 401-05 (JP)**
• **KAJITORI, Toyotada**
**Fanuc Dai-3 Villa-karamatsu**
**Yamanashi 401-05 (JP)**
• **YODA, Shinji**
**Fanuc Dai-3 Villa-karamatsu**
**Yamanashi 401-05 (JP)**

(74) Representative:
**Jackson, Peter Arthur et al**
**GILL JENNINGS & EVERY**
**Broadgate House**
**7 Eldon Street**
**London EC2M 7LH (GB)**

(56) References cited:
**JP-A- 1 121 131**

• **PATENT ABSTRACTS OF JAPAN vol. 018 no. 289**
**(M-1614) ,2 June 1994 & JP-A-06 055359**
**(MAKINO MILLING MACH CO LTD) 1 March 1994,**
• **Microfilm of the Specification and Drawings**
**Annexed to the Written Application of Japanese**
**Utility Model Application No. 27536/1991 (Laid-**
**Open No. 60729/1993) (Makino Milling**
**Seisakusho K.K.), August 10, 1993 (10.08.93),**
**line 17, page 7 to line 12, page 8, Fig. 1, (Family:**
**none).**

**Description**

The present invention relates to a wire tension controlling system for controlling the wire tension on a wire cut electric discharge machine to a proper value.

The wire tension on a wire cut electric discharge machine is one of important machining conditions in performing electric discharge machining. As a device for giving tension to a wire, a powder clutch is commonly used. The powder clutch, using magnetic powder as a medium for transmitting power, brakes the wire feed by acting on a wire tension brake roller provided on the wire feed side.

However, the powder clutch has a problem in varying and decreasing tension even if a constant energizing current is given to the powder clutch, because the powder deteriorates in use.

To prevent the decrease in tension, a system is also used which detects wire tension by using a step roller or a load cell installed on the wire feed side, and gives feedback to the energizing current for a powder clutch by means of the detection signal to correct the wire tension. However, this system requires a complicated system such as a feedback circuit. Also, with this system, the control is prone to be unstable and the energising current fluctuates and oscillates. Further, this system has a problem in easily being affected by noise.

The present invention has been made in view of these circumstances, and it is an object of the present invention to provide a wire tension controlling system which can control wire tension stably with a simple system.

According to the present invention, there is provided a wire tension controlling system which for controlling the wire tension on a wire cut electric discharge machine to a proper value, the system comprising torque detecting means for detecting a load torque of a motor on the take-up side of a wire to give an indication of wire tension; torque determining means for determining whether the torque detection value obtained by the torque detecting means falls within a predetermined range with respect to a target value; a wire brake installed on the feed side of the wire, the wire brake being controllable by a driving current to adjust the tension applied to the wire; and wire tension controlling means for controlling the wire tension to a preset value by changing the driving current when the torque determining means judges that the torque detection value does not fall within the predetermined range with respect to the target value.

The torque detecting means detects the load torque of the motor on the take-up side of the wire as wire tension. The torque determining means determines whether the torque detection value obtained by the torque detecting means falls within the predetermined range with respect to the target value. The wire tension controlling means controls the wire tension so that the wire tension is kept at the preset value by changing the driving current for the wire brake installed on the feed side of the wire when the torque detection value does not fall within the predetermined range with respect to the target value.

In the accompanying drawings:

FIG. 1 is a block diagram showing the principle of a wire tension controlling system in accordance with the present invention;

FIG. 2 is a view showing the whole configuration of a wire tension controlling system in accordance with the present invention;

FIG. 3 is a table showing wire tension setting data;

FIG. 4 is a flowchart for carrying out the control of the energizing current for a powder clutch;

FIG. 5 is a flowchart for executing a second embodiment of the present invention; and

FIGS. 6(A) and 6(B) are views for illustrating the control of the energizing current in a first embodiment and a second embodiment, respectively.

An embodiment of the present invention will be described with reference to the drawings.

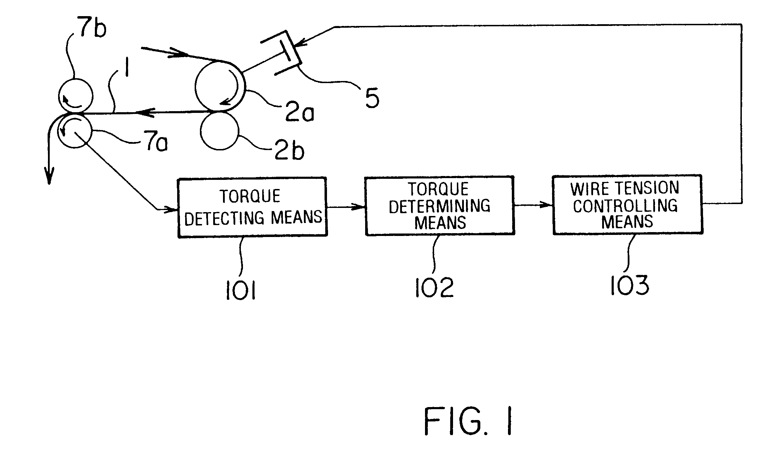

FIG. 1 is a block diagram showing the principle of a wire tension controlling system in accordance with the present invention. In FIG. 1, torque detecting means 101 detects a load torque of a motor on the take-up side of a wire 1 as wire tension. Torque determining means 102 determines whether the torque detection value detected by the torque detecting means 101 falls within a predetermined range with respect to the target value. Wire tension controlling means 103 controls the wire tension so that the wire tension is kept at a preset value by changing the energizing current for the powder clutch 5 installed on the feed side of the wire 1 when the torque detection value does not fall within the predetermined range with respect to the target value.

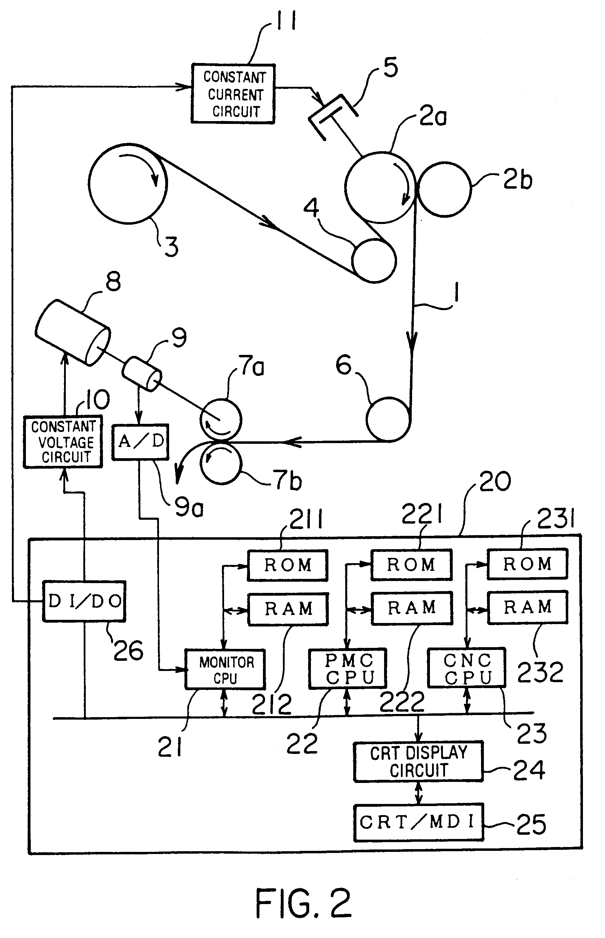

FIG. 2 is a view showing the whole configuration of a wire tension controlling system in accordance with the present invention. In FIG. 2, the wire 1 of an electric discharge machine carries out pulse discharge between the wire 1 and a workpiece, not shown, to machine the workpiece into a predetermined shape. The wire 1, being fed continuously from a wire bobbin 3 on the feed side, reaches a pair of brake rollers 2a and 2b via an intermediate roller 4, is pulled by a pair of wire take-up rollers 7a and 7b installed at the final stage while being braked by being held between the brake rollers 2a and 2b, and is wound on a wire bobbin not illustrated on the take-up side.

A powder clutch 5 is mounted on the brake roller 2a. The braked condition described above is produced by the powder clutch 5. The braking force of the powder clutch 5 is controlled by a numerical control unit 20, the details of which will be described later.

The wire take-up roller 7a takes up the wire 1 by means of the rotation of a DC motor 8. On the shaft of the DC motor 8 is installed a torque detector 9 for detecting the shaft torque. Since the drive torque of the DC motor 8 determines the tension of the wire 1, the shaft torque detected by the torque detector 9 is in an equivalent relation with the tension of the wire 1. The detection signal of the torque detector 9 is converted into a digital signal by an A/D converter 9a incorporated in the torque detector 9, and then sent to the numerical control unit 20.

A wire guide 6 is installed between the brake rollers 2a, 2b and the wire take-up rollers 7a, 7b. The path of the wire 1 is guided by this wire guide 6. A workpiece is set between the brake rollers 2a, 2b and the wire guide 6.

The numerical control unit (CNC) 20 has a CPU 23, which is a central processor for controlling the numerical control unit 20 in its entirety. The CPU 23 accesses a ROM 231 and RAM 232 connected thereto via a bus for carrying out the control of the numerical control unit 20 as a whole.

A CPU 22 is a processor for controlling a PMC (programmable machine controller). The ROM 221 stores a program for controlling the PMC and a program for operating the wire tension controlling system in accordance with the present invention. A non-volatile RAM 222 stores data such as the target value of shaft torque detected by the torque detector 9. The CPU 22 gains access to ROM 221 and RAM 222 to control the whole of the PMC and carries out the control of wire tension as described in detail later.

A CPU 21, which is a processor for controlling an interface, gains access to ROM 211 and RAM 212 to fulfill functions of monitoring a signal from the torque detector 9 and transferring the signal to the CPU 22.

A command signal generated in the CPU 22 on the PMC side is outputted to the powder clutch 5 through an interface (DI/DO) 26 and a constant current circuit 11. It is also outputted to the DC motor 8 through the interface 26 and a constant voltage circuit 10. The command signal sent to the DC motor 8 is a signal for turning on/off the DC motor 8.

A CRT display circuit 24 converts a digital signal into an image signal for display and outputs the image signal. The image signal is sent to a CRT/MDI unit 25 and displayed on the screen thereof. The setting of wire tension, described later, is performed on this screen.

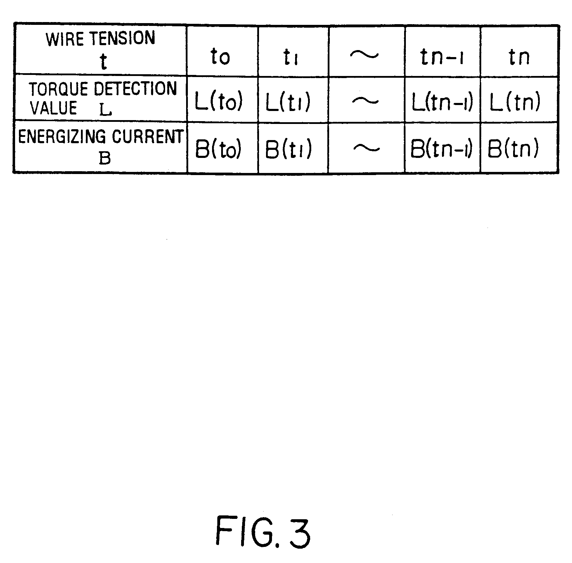

On the above-described electric discharge machine, the wire tension controlling system is operated as follows: first, the setting of wire tension is performed on the screen. As shown in FIG. 3, the target torque value $L(t_i)$ of the torque detector 9 and the energizing current $B(t_i)$ for the powder clutch 5 corresponding to the wire tension $t_i$ are set. The wire tension is set in advance over the range of wire tension $t_0$ to $t_n$. The set data are stored in the RAM 222 on the PMC side as described above. The torque value $L(t_i)$ and the energizing current $B(t_i)$ for wire tension other than $t_0$, $t_1$, ..., $t_n$ are determined by interpolating calculation. This setting is performed without a workpiece being set while the wire 1 is being wound in the braked condition.

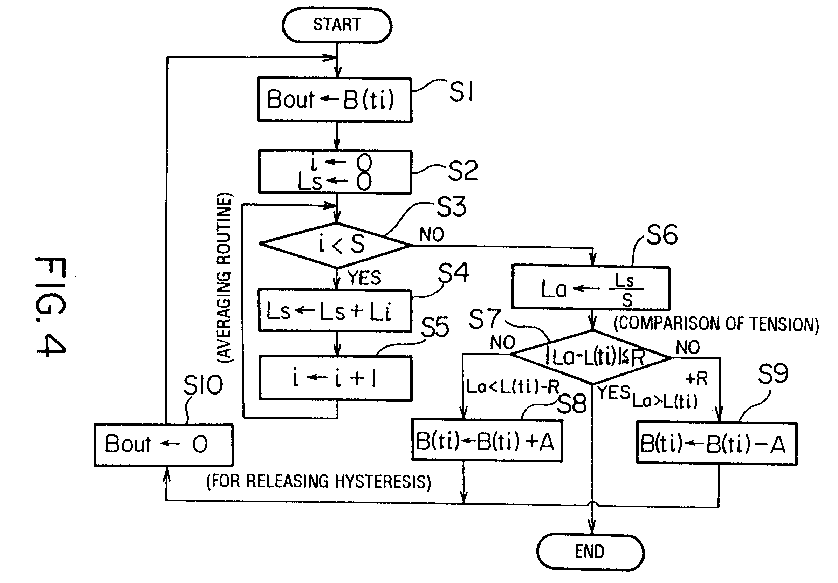

Next, the control of the energizing current for the powder clutch 5 is carried out to obtain a desired wire tension on the basis of the above wire tension setting data. The control of the energizing current is carried out in accordance with the flowchart shown in FIG. 4.

FIG. 4 is a flowchart for carrying out the control of the energizing current for a powder clutch. The numeral following S in FIG. 4 indicates a step number.

[S1] The energizing current for providing a desired wire tension is determined from the wire tension setting data, and the energizing current $B(t_i)$ is supplied to the powder clutch 5.

[S2] The variable i and the detection value sum $L_s$ of the torque detector 9 are reset to 0.

[S3] It is determined whether the variable i reaches a predetermined number of sampling operations S, for example, 20. If the variable i does not reach the predetermined number of sampling operations S, the process proceeds to the next Step S4. If it does, the process proceeds to Step S6.

[S4] The detection value of this time $L_i$ is added to the detection value sum $L_s$ of the torque detector 9.

[S5] One is added to the variable i, and the process returns to Step S3. The procedure from Step S3 to Step S5 is a routine for averaging the detection value $L_i$.

[S6] The detection value sum $L_s$ is divided by the number of sampling operations S to determine the average value $L_a$ of the detection value sum $L_s$.

[S7] The difference between the average value $L_a$ and the target torque value $L(t_i)$ corresponding to the desired wire tension is determined, and it is determined whether the absolute value of the difference $|L_a - L(t_i)|$ is within a predetermined range R. If the absolute value is within the range R, this program is completed. If $L_a - L(t_i) < -R$, the process proceeds to Step S8. If $L_a - L(t_i) > R$, the process proceeds to Step S9.

[S8] Since the average value $L_a$ is small, A is added to the energizing current $B(t_i)$ for the powder clutch 5 to increase the energizing current $B(t_i)$.

[S9] Since the average value $L_a$ is large, A is subtracted from the energizing current $B(t_i)$ for the powder clutch 5 to decrease the energizing current $B(t_i)$.

[S10] To release the hysteresis of the powder clutch 5, the energizing current for the powder clutch 5 is once reset to 0 to return the powder to the initial condition. Then, the process returns to Step S1. In Step S1, a new energizing current $B(t_i)$ is supplied.

As described above, in this embodiment, the shaft torque of the motor for taking up the wire 1 is detected as wire tension, and the energizing current for the powder clutch 5 is controlled so that the shaft torque takes a desired value. Therefore, suitable measures can be taken to prevent the variation in wire tension caused by the deterioration in powder, so that the wire tension can be kept constant. Also, the wire tension can be controlled by a simple method using software on the PMC side without a complicated system such as a feedback circuit. Accordingly, stable control can be carried out.

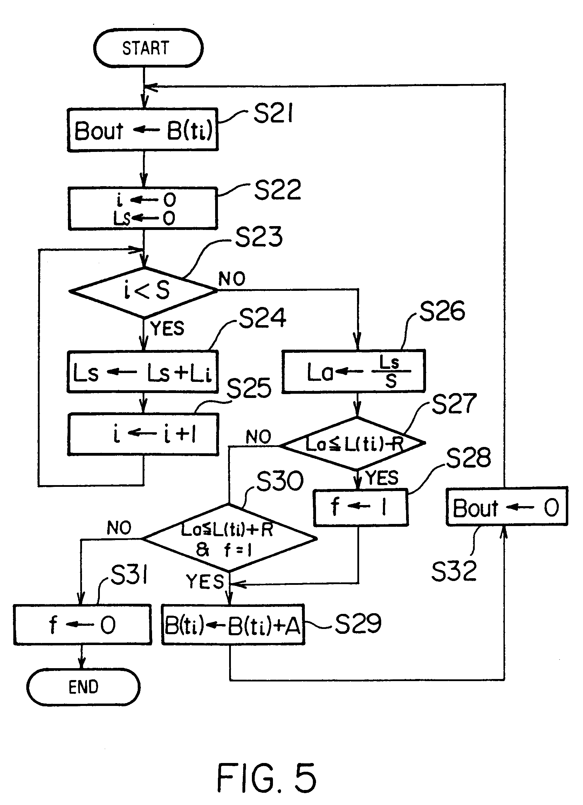

FIG. 5 is a flowchart for executing a second embodiment of the present invention. In FIG. 5, the procedure from Step S21 to Step S26 is the same as the procedure from Step S1 to Step S6 in the flowchart shown in FIG. 4. Therefore, the explanation of the procedure from Step S21 to Step S26 is omitted here, and Step S27 and the following steps will be described.

[S27] It is determined whether the average value $L_a$ is not larger than $(L(t_i) - R)$, the value obtained by subtracting the range R from the target torque value $L(t_i)$. If the average value is not larger than this value, the process proceeds to Step S28. If the average value is larger than this value, the process proceeds to Step S30.

[S28] Flag f is set to 1.

[S29] Since the average value $L_a$ is small, A is added to the energizing current $B(t_i)$ for the powder clutch 5 to increase the energizing current $B(t_i)$.

[S30] It is determined whether the average value $L_a$ is not larger than $(L(t_i) + R)$, the value obtained by adding the range R to the target torque value $L(t_i)$, and the flag f is 1. If both of the two conditions are met, Step S29 is executed to continuously increase the energizing current $B(t_i)$. The energizing current $B(t_i)$ is increased until the average value $L_a$ reaches $(L(t_i) + R)$. If both or either of the two conditions is not met, the process proceeds to Step S31.

[S31] Flag f is set to 0, and this program is completed.

[S32] To release the hysteresis of the powder clutch 5, the energizing current for the powder clutch 5 is once reset to 0 to return the powder to the initial condition. Then, the process returns to Step S21. In Step S21, a new energizing current $B(t_i)$ is supplied.

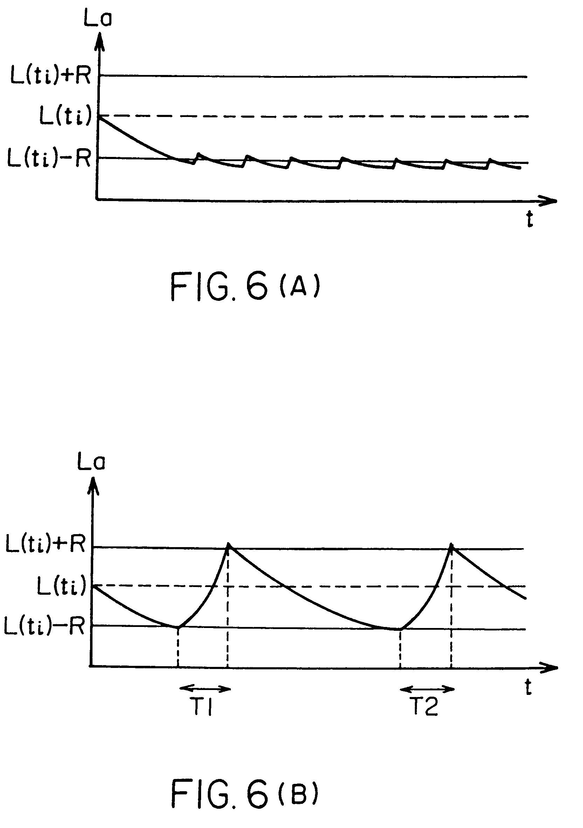

The difference between the control of the energizing current in the first embodiment and the control of the energizing current in the second embodiment will be explained with reference to FIGS. 6(A) and 6(B).

FIGS. 6(A) and 6(B) are views for illustrating the control of the energizing current in the first embodiment and the second embodiment, respectively. According to the first embodiment, when the average value $L_a$ resulting from the detection by the torque detector 9 decreases beyond the range R due to the deterioration in the powder clutch 5, the energizing current $B(t_i)$ is increased by A, but the deterioration characteristics of the powder clutch 5 is unchanged. Therefore, as shown in FIG. 6(A), the control of the average value $L_a$ by means of the energizing current $B(t_i)$ is sometimes carried out with the value $(L(t_i) - R)$ being the center. In this case, it is difficult to carry out the control with the target value $L(t_i)$ being the center.

According to the second embodiment, when the average value $L_a$ decreases beyond the range R, the energizing current $B(t_i)$ is increased continuously until the average value $L_a$ becomes $(L(t_i) + R)$ as shown in control periods T1, T2 in FIG. 6(B). Therefore, the control of the average value $L_a$ is carried out with the target value $L(t_i)$ being the center.

In the above description, wire tension has been controlled on the PMC side. However, it may be controlled on the CNC side or on the side of an external control unit.

As described above, the shaft torque on the take-up motor side of the wire is detected as wire tension, and the driving current for the wire brake is controlled so that the shaft torque takes a desired value. Therefore, suitable measures can be taken to prevent the variation in wire tension caused by the deterioration in brake force, so that the wire tension can be kept constant.

Also, the wire tension can be controlled by a simple method using software without a complicated system such as a feedback circuit. Accordingly, stable control can be carried out.

**Claims**

1. A wire tension controlling system which for controlling the wire tension on a wire cut electric discharge machine to a proper value, the system comprising torque detecting means (9) for detecting a load torque of a motor (8) on the take-up side of a wire (1) to give an indication of wire tension; torque determining means for determining whether the torque detection value obtained by the torque detecting means falls within a predetermined range with respect to a target value; a wire brake (5) installed on the feed side of the wire, the wire brake being controllable by a driving current to adjust the tension applied to the wire (1); and wire tension controlling means for controlling the wire tension to a preset value by changing the driving current when the torque determining means judges that the torque detection value does not fall within the predetermined range with respect to the target value.

2. A wire tension controlling system according to claim 1, wherein the target value of the torque detection value is related to a desired value of the wire tension.

3. A wire tension controlling system according to claim 1, wherein the wire brake is a powder clutch (5).

**Patentansprüche**

1. Drahtspannungsregelungssystem zur Regelung der Drahtspannung auf einer Draht-Schneide-Funkenerosionsmaschine auf einen ordnungsgemässen Wert, wobei das System ein Drehmomenterfassungsmittel (9) zur Erfassung des Last-Drehmoments eines Motors (8) auf der Abnahmeseite eines Drahts (1)zur Bereitstellung einer Anzeige der Drahtspannung; ein Drehmomentbestimmungsmittel zur Bestimmung, ob der durch das Drehmomenterfassungsmittel erhaltene Drehmomenterfassungswert in einen vorbestimmten Bereich bezüglich eines Zielwerts fällt; eine auf der Zuführungsseite des Drahts installierte Drahtbremse (5), wobei die Drahtbremse durch einen Antriebsstrom regelbar ist, um die an den Draht (1) angelegte Spannung einzustellen; und Drahtspannungsregelungsmittel zur Regelung der Drahtspannung auf einen voreingestellten Wert durch Verändern des Ansteuerstroms, wenn das Drehmomentbestimmungsmittel entscheidet, dass der Drehmomenterfassungswert nicht in den vorbestimmten Bereich bezüglich des Zielwerts fällt, umfasst.

2. Drahtspannungsregelungssystem nach Anspruch 1, wobei der Zielwert des Drehmomenterfassungswerts mit einem gewünschten Wert der Drahtspannung in Zusammenhang steht.

3. Drahtspannungsregelungssystem nach Anspruch 1, wobei die Drahtbremse eine Pulverkupplung (5) ist.

**Revendications**

1. Système de commande de la tension d'un fil, pour maintenir à une valeur convenable la tension du fil d'une machine à fil d'usinage par électroérosion, le système comprenant un moyen (9) de détection de couple, pour détecter un couple de charge d'un moteur (8) du côté traction d'un fil (1), pour donner une indication de la tension du fil; un moyen de détermination de couple pour déterminer si la valeur de couple détectée, obtenue par le moyen de détection de couple, tombe dans un intervalle prédéterminé par rapport à une valeur cible; un frein (5) à fil, installé du côté d'admission du fil, le frein à fil pouvant être commandé par un courant d'entraînement pour ajuster la tension appliquée au fil (1); et un moyen de commande de la tension du fil, pour commander la tension du fil à une valeur préétablie en changeant le courant d'entraînement lorsque le moyen de détermination de couple juge que la valeur de couple détectée ne tombe pas dans l'intervalle prédéterminé par rapport à la valeur cible.

2. Système de commande de la tension d'un fil selon la revendication 1, dans lequel la valeur cible de la valeur de couple détectée est liée à une valeur souhaitée de la tension du fil.

3. Système de commande de la tension d'un fil selon la revendication 1, dans lequel le frein à fil est un embrayage à poudre (5).

FIG. I

FIG. 2

| WIRE TENSION t | $t_0$ | $t_1$ | $\sim$ | $t_{n-1}$ | $t_n$ |
|---|---|---|---|---|---|
| TORQUE DETECTION VALUE L | $L(t_0)$ | $L(t_1)$ | $\sim$ | $L(t_{n-1})$ | $L(t_n)$ |
| ENERGIZING CURRENT B | $B(t_0)$ | $B(t_1)$ | $\sim$ | $B(t_{n-1})$ | $B(t_n)$ |

# FIG. 3

START

Bout ← B(ti)  S1

Ls ← 0
i ← 0   S2

S3 — i < S ?  NO / YES

Ls ← Ls + Li   S4

i ← i + 1   S5

(AVERAGING ROUTINE)

La ← $\frac{Ls}{S}$   S6

(COMPARISON OF TENSION)

|La−L(ti)| ≤ R   S7   NO / YES

La < L(ti) − R

B(ti) ← B(ti) + A   S8

La > L(ti) + R

B(ti) ← B(ti) − A   S9

Bout ← 0   S10

(FOR RELEASING HYSTERESIS)

END

# FIG. 4

START

$Bout \leftarrow B(ti)$ — S21

$i \leftarrow 0$
$Ls \leftarrow 0$ — S22

S23

$i < S$ — NO

YES — S24

$Ls \leftarrow Ls + Li$ — S25

$i \leftarrow i + 1$

S26

$La \leftarrow \dfrac{Ls}{S}$

S27

$Lo \leq L(ti) - R$ — YES — S28

NO

$f \leftarrow 1$

$Bout \leftarrow 0$

S32

S30

$Lo \leq L(ti) + R$
& $f = 1$

NO

YES

S31

$f \leftarrow 0$

$B(ti) \leftarrow B(ti) + A$ — S29

END

# FIG. 5

FIG. 6 (A)

FIG. 6 (B)